# EUROPEAN PATENT APPLICATION

(11) **EP 0 720 968 A1**
(43) Date of publication of application: **10.07.1996**
(21) Application number: 95923553.2
(22) Date of filing: 30.06.1995
(51) Int. Cl.: C02F 1/28, C02F 1/44, C02F 1/62

(54) **WATER CLEANER**

(30) Priority: 25.07.1994 JP 192305/94
(71) Applicant: TOTO LTD., Kitakyushu-shi Fukuoka 802 (JP)
(72) Inventor: YASUDA, Motoshi Toto Ltd. 1-1, Nakashima 2-chome, Kitakyushu-shi Fukuoka-ken 802 (JP); HATONO, Hironori Toto Ltd. 1-1, Nakashima 2-chome, Fukuoka-ken 802 (JP); KAWAMURA, Etsuko Toto Ltd. 1-1, Nakashima 2-chome, Fukuoka-ken 802 (JP); KITAZAKI, Satoru Toto Ltd. 1-1, Nakashima 2-chome, Fukuoka-ken 802 (JP); IMASAKA, Takuo Toto Ltd. 1-1, Nakashima 2-chome, Fukuoka-ken 802 (JP)
(74) Representative: Grünecker, Kinkeldey, Stockmair & Schwanhäusser Anwaltssozietät
(86) International application number: JP9501306
(87) International publication number: WO9603348

(57) **Abstract**

A water purifier has a compartment filled with activated carbon and calcium phosphate ceramic.

## Description

### [ TECHNICAL FIELD ]

The present invention relates to a water purifier such as a drinking water purifier.

### [ BACKGROUND ART ]

Conventional drinking water purifiers remove dissolved harmful heavy metals such as lead, chlorine odor, musty odor, micro-organisms, etc. from drinking water by use of activated carbon and filtration films.

Conventional drinking water purifiers have various disadvantages such as that the lead adsorbing capability of the activated carbon rapidly deteriorates with age and that the lead once adsorbed by the activated carbon elutes back into the drinking water, especially hot drinking water, in large quantity.

### [ DISCLOSURE OF INVENTION ]

An object of the present invention is therefore to provide a water purifier which can remove lead, chlorine odor, musty odor, etc. from water, whose lead adsorbing capability does not rapidly deteriorate with age, and wherein lead once adsorbed by activated carbon does not elute back into the treated water in large quantity .

Another object of the present invention is to provide a drinking water purifier which can remove lead, chlorine odor, musty odor, etc. from drinking water, but does not remove useful minerals dissolved in the drinking water, whose lead adsorbing capability does not rapidly deteriorate with age, and wherein lead once adsorbed by activated carbon does not elute back into the drinking water in large quantity.

According to one aspect of the present invention, there is provided a water purifier which has a compartment filled with activated carbon and calcium phosphate ceramic.

In this water purifier, mainly chlorine odor and musty odor of water are removed by the activated carbon, and lead dissolved in the water is removed by the calcium phosphate ceramic. The lead adsorbing capability of the calcium phosphate ceramic does not rapidly deteriorate with age. The lead once adsorbed by the calcium phosphate ceramic does not elute back into the water in large quantity. Even if the lead once adsorbed by the activated carbon elutes back into the water, the lead is then adsorbed by the calcium phosphate ceramic charged in the same compartment with the activated carbon. Thus, the lead is not dissolved in large quantity in the treated water discharged from the water purifier.

When the activated carbon and the calcium phosphate ceramic are charged in the same compartment, the size of the water purifier becomes smaller than that of a water purifier wherein activated carbon and calcium phosphate ceramic are charged in different compartments.

According to a preferred embodiment of the present invention, the calcium phosphate ceramic is bone char.

When bone char is used as the calcium phosphate ceramic, the lead adsorbing capability of the water purifier is enhanced markedly.

According to another preferred embodiment of the present invention, the ratio of the calcium phosphate ceramic to the sum of the activated carbon and the calcium phosphate ceramic is from 1 to 25 volume%.

When the ratio of the calcium phosphate ceramic to the sum of the activated carbon and the calcium phosphate ceramic is from 1 to 25 volume %, the lead once adsorbed by the activated carbon does not elute back into the treated water and the lead concentration of the treated water does not increase temporarily at the start of the water purification.

According to another preferred embodiment of the present invention, the ratio of the calcium phosphate ceramic to the sum of the activated carbon and the calcium phosphate ceramic is not less than 25 volume %.

When the ratio of the calcium phosphate ceramic to the sum of the activated carbon and the calcium phosphate ceramic is 25 volume % or more, the lead removing capability of the water purifier is maintained high for a long time.

According to another preferred embodiment of the present invention, granular and/or fibrous activated carbon and granular and/or fibrous calcium phosphate ceramic are charged in the compartment.

According to another preferred embodiment of the present invention, granular and/or fibrous activated carbon and granular and/or fibrous phosphate ceramic are mixed and charged in the compartment.

According to another preferred embodiment of the present invention, granular and/or fibrous activated carbon bearing and holding granular calcium phosphate ceramic are charged in the compartment.

According to another preferred embodiment of the present invention, granular and/or fibrous calcium phosphate ceramic bearing and holding granular activated carbon are charged in the compartment.

According to another preferred embodiment of the present invention, granular and/or fibrous activated carbon and granular and/or fibrous base material bearing and holding granular calcium phosphate ceramic are mixed and charged in the compartment.

According to another preferred embodiment of the present invention, granular and/or fibrous calcium phosphate ceramic and granular and/or fibrous base material bearing and holding granular activated carbon are mixed and charged in the compartment.

According to another preferred embodiment of the present invention, a stacked body having a layer of granular and/or fibrous activated carbon and a layer of granular and/or fibrous calcium phosphate ceramic is charged in the compartment.

According to another preferred embodiment of the present invention, the stacked body is made by coiling a fibrous activated carbon sheet on whose surface granular and/or fibrous calcium phosphate ceramic is scattered.

According to another preferred embodiment of the present invention, the stacked body is made by coiling into an integral body a fibrous activated carbon sheet and a porous base material sheet bearing and holding granular calcium phosphate ceramic.

According to another preferred embodiment of the present invention, granular and/or fibrous base material bearing and holding granular activated carbon and granular calcium phosphate ceramic are charged in the compartment.

According to another preferred embodiment of the present invention, a stacked body having layers each of which includes granular and/or fibrous activated carbon and granular and/or fibrous calcium phosphate ceramic is charged in the compartment.

According to another preferred embodiment of the present invention, the stacked body is made by coiling a base material sheet on whose surface granular and/or fibrous activated carbon and granular and/or fibrous calcium phosphate ceramic are scattered.

According to another preferred embodiment of the present invention, the stacked body is made by coiling into an integral body a base material sheet and a porous base material sheet bearing and holding granular calcium phosphate ceramic and granular activated carbon.

The activated carbon and the calcium phosphate ceramic must be charged in the compartment in such a manner that the water can permeate through them. This requirement is satisfied when granular and/or fibrous activated carbon and granular and/or fibrous calcium phosphate ceramic are charged in the compartment. Any manner of charging granular and/or fibrous activated carbon and granular and/or fibrous calcium phosphate ceramic in the compartment is acceptable. Particulate and/or fibrous activated carbon and granular and/or fibrous calcium phosphate ceramic may be mixed and charged in the compartment, granular and/or fibrous activated carbon bearing and holding granular calcium phosphate ceramic may be charged in the compartment, granular and/or fibrous calcium phosphate ceramic bearing and holding granular activated carbon may be charged in the compartment, granular and/or fibrous activated carbon and granular and/or fibrous base material bearing and holding granular calcium phosphate ceramic may be mixed and charged in the compartment, granular and/or fibrous calcium phosphate ceramic and granular and/or fibrous base material bearing and holding granular activated carbon may be mixed and charged in the compartment, or a stacked body having a layer of granular and/or fibrous activated carbon and a layer of granular and/or fibrous calcium phosphate ceramic may be charged in the compartment. The stacked body may be made by coiling a fibrous activated carbon sheet on whose surface granular and/or fibrous calcium phosphate ceramic is scattered, or by coiling into an integral body a fibrous activated carbon sheet and a porous base material sheet bearing and holding granular calcium phosphate ceramic. Particulate and/or fibrous base material bearing and holding granular activated carbon and granular calcium phosphate ceramic may be charged in the compartment, or a stacked body having layers each of which includes granular and/or fibrous activated carbon and granular and/or fibrous calcium phosphate ceramic may be charged in the compartment. The stacked body may be made by coiling a base material sheet on whose surface granular and/or fibrous activated carbon and granular and/or fibrous calcium phosphate ceramic are scattered, or coiling into an integral body a base material sheet and a porous base material sheet bearing and holding granular activated carbon and granular calcium phosphate ceramic. Any of the above described charging methods enables the size of the water purifier to become smaller than that of a water purifier wherein the activated carbon and the calcium phosphate ceramic are charged in different compartments.

According to another aspect of the present invention, there is provided a water purifier which has a compartment filled with activated carbon and a compartment filled with calcium phosphate ceramic powder.

In the water purifier according to this aspect of the invention, when water permeates through the filtration layer constituted by the activated carbon and the filtration layer constituted by the calcium phosphate ceramic powder, chlorine odor, musty odor, etc. are removed by the activated carbon and lead is removed by the calcium phosphate ceramic powder.

According to another preferred embodiment of the present invention, the water purifier is a drinking water purifier.

Calcium phosphate ceramic removes lead but it does not remove useful minerals. Thus, a water purifier in accordance with the present invention is suitable for purifying drinking water.

According to another preferred embodiment of the present invention, the water purifier is a drinking water purifier having a compartment filled with hollow fiber filtration films.

The water purifier having a compartment filled with hollow fiber filtration films is suitable for purifying drinking water because contaminants, microorganisms, etc. are removed by the hollow fiber filtration films.

According to another preferred embodiment of the present invention, the spaces between the hollow fiber filtration films are filled with calcium phosphate ceramic powder.

When the spaces between the hollow fiber filtration films are filled with calcium phosphate ceramic powder, the lead removal rate of the water purifier increases.

A water purifier in accordance with another aspect of the present invention has a compartment filled with activated carbon, a compartment filled with hollow fiber filtration films, and a porous filtration plate bearing and holding calcium phosphate ceramic powder on its surface.

A porous filtration plate bearing and holding calcium phosphate ceramic powder on its surface can also remove lead.

### [ BRIEF DESCRIPTION OF THE DRAWINGS ]

In the drawings:
Figure 1(a) is a side sectional view of a drinking water purifier in accordance with a first embodiment of the present invention and Figure 1(b) is a sectional view taken along line b-b in Figure 1(a).
Figures 2(a) and 2(b) are views showing shapes of activated carbon and calcium phosphate ceramic charged in the first compartment of a drinking water purifier in accordance with a second embodiment of the present invention.
Figures 3(a) and 3(b) are views showing shapes of activated carbon and calcium phosphate ceramic charged in the first compartment of a drinking water purifier in accordance with a third embodiment of the present invention.
Figures 4(a), 4(b), 4(c) and 4(d) are views showing shapes of activated carbon and calcium phosphate ceramic charged in the first compartment of a drinking water purifier in accordance with a fourth embodiment of the present invention.
Figures 5(a), 5(b), 5(c) and 5(d) are views showing shapes of activated carbon and calcium phosphate ceramic charged in the first compartment of a drinking water purifier in accordance with a fifth embodiment of the present invention.
Figures 6(a) and 6(b) are views showing shapes of activated carbon and calcium phosphate ceramic charged in the first compartment of a drinking water purifier in accordance with a sixth embodiment of the present invention.
Figures 7(a) and 7(b) are views showing shapes of activated carbon and calcium phosphate ceramic charged in the first compartment of a drinking water purifier in accordance with a seventh embodiment of the present invention.
Figures 8(a) and 8(b) are views showing shapes of activated carbon and calcium phosphate ceramic charged in the first compartment of a drinking water purifier in accordance with an eighth embodiment of the present invention.
Figure 9 is a side sectional view of a drinking water purifier in accordance with a ninth embodiment of the present invention.
Figure 10 is an enlarged sectional view taken along line X-X in Figure 9.
Figure 11 is a sectional view taken along line XI-XI in Figure 9.
Figure 12 is a side sectional view of a drinking water purifier in accordance with a tenth embodiment of the present invention.
Figure 13 is an enlarged plan view of a filtration plate disposed in the drinking water purifier in accordance with the tenth embodiment of the present invention.
Figure 14 is a graph showing the measured Pb (lead) removing efficiencies of various adsorbents.
Figure 15 is a graph showing the measured Ca (calcium) removing efficiencies of various adsorbents.
Figure 16 is a graph showing the measured Mg (magnesium) removing efficiencies of various adsorbents.
Figure 17 is the layout of a measuring apparatus used in lead elution tests carried out for confirming the effect of the present invention.
Figure 18 is the layout of another measuring apparatus used in lead elution tests carried out for confirming the effect of the present invention.
Figure 19 is a graph showing the results of lead elution test no.1 carried out for confirming the effect of the present invention.
Figure 20 is a graph showing the results of lead elution test no.2 carried out for confirming the effect of the present invention.
Figure 21 is the layout of part of a measuring apparatus used in lead elution test no.3 carried out for confirming the effect of the present invention.
Figure 22 is a graph showing the results of lead elution test no.3 carried out for confirming the effect of the present invention.
Figure 23 is a graph showing the results of lead elution test no.4 carried out for confirming the effect of the present invention.
Figure 24 is a graph showing the results of lead elution test no.4 carried out for confirming the effect of the present invention.
Figure 25 is a graph showing the results of purification tests using commercially available drinking water purifiers carried out for confirming the effect of the present invention.

### [THE BEST MODE FOR CARRYING OUT THE INVENTION]

### ( 1 ) Embodiments

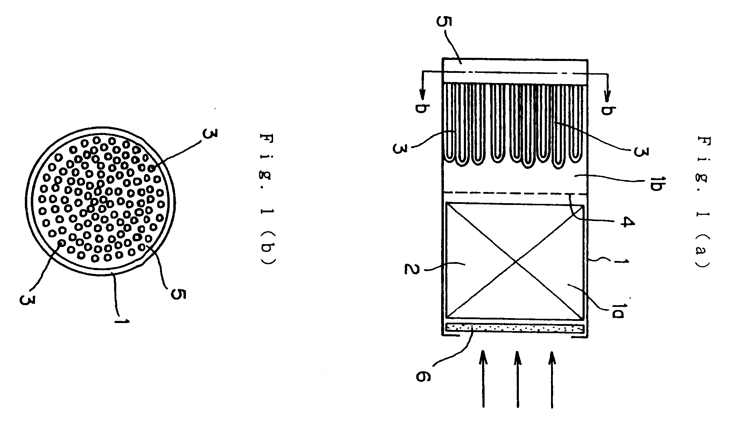

A drinking water purifier in accordance with a first embodiment of the present invention will be described with reference to Figures 1(a), 1(b).

As shown in Figure 1(a), a first compartment 1a and a second compartment 1b are disposed in a case 1. The first compartment 1a is filled with mixture 2 of granular and/or fibrous activated carbon and granular and/or fibrous calcium phosphate ceramic. Examples of the calcium phosphate ceramic are hydroxyapatite, calcium tertiary phosphate, calcium primary phosphate, calcium secondary phosphate, calcium pyrophosphate, tetracalcium phosphate, octacalcium phosphate, bone char, bone powder, etc. The second compartment 1b is filled with hollow fiber filtration films 3. The compartments are disposed in series with the first compartment 1a on the upstream side and the second compartment 1b on the downstream side relative to the water flow indicated by arrows in Figure 1(a).

A porous partition plate 4 is disposed between the first compartment 1a and the second compartment 1b.

The downstream ends of the hollow fiber filtration films 3 charged in the second compartment 1b are held by an end plate 5 as shown in Figure 1(b).

A porous partition plate 6 is disposed in the first compartment 1a and upstream of the mixture 2 of the activated carbon and the calcium phosphate ceramic to remove coarse iron rust particles from the water flow.

In the present water purifier, when drinking water passes through the filtration layer constituted by the mixture 2 of the activated carbon and the calcium phosphate ceramic and the filtration layer constituted by the hollow fiber filtration films 3, mainly chlorine odor, musty odor, etc. in the drinking water are removed by the activated carbon in the mixture 2, lead dissolved in the drinking water is removed by the calcium phosphate ceramic in the mixture 2, and other contaminants, microorganisms, etc. in the drinking water are removed by the hollow fiber filtration films 3. As the activated carbon and the calcium phosphate ceramic charged in the first compartment 1a are granular or fibrous, they do not disturb the passage of the drinking water.

Calcium phosphate ceramic maintains its lead adsorbing capability for a long time. Lead adsorbed by the calcium phosphate ceramic does not elute in large quantity back into the drinking water. Even if the lead once adsorbed by the activated carbon elutes back into the drinking water, it is then adsorbed by the calcium phosphate ceramic charged in the first compartment 1a together with the activated carbon. Thus, the lead is not dissolved in large quantity in the treated water discharged from the present water purifier. As the activated carbon and the calcium phosphate ceramic are charged in the same compartment 1a, the size of the present water purifier is smaller than that of a water purifier wherein activated carbon and calcium phosphate ceramic are charged in different compartments.

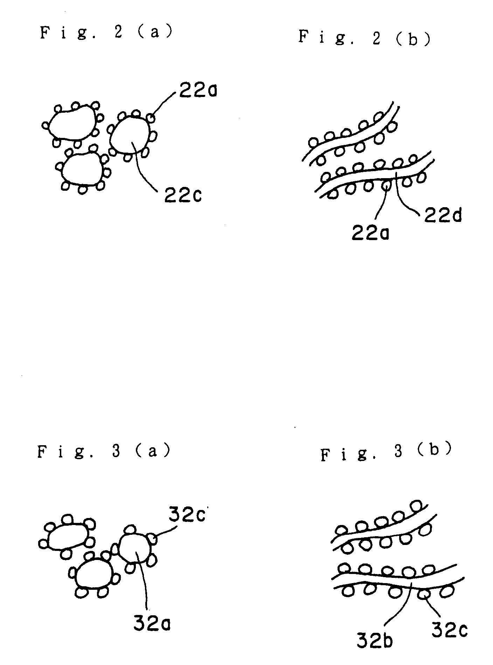

A drinking water purifier in accordance with a second embodiment of the present invention will be described with reference to Figures 2(a), 2(b).

In the second embodiment, as shown in Figures 2(a), 2(b), granular activated carbon 22c and/or fibrous activated carbon 22d bearing and holding granular calcium phosphate ceramic 22a are charged in the first compartment 1a.

The method proposed by the present inventors in Japanese Patent Application no. 70189/1994 may be used for causing the granular activated carbon 22c and/or fibrous activated carbon 22d to bear and hold the granular calcium phosphate ceramic 22a. In this method, glass powder containing mainly CaO and SiO₂ is disposed separated from and opposing to the granular activated carbon 22c and/or fibrous activated carbon 22d, substantially saturated or supersaturated aqueous solution of the components of hydroxyapatite is passed from the glass powder to the activated carbon 22c and/or 22d to permeate the activated carbon 22c and/or 22d, particles of hydroxyapatite are grown to a fairy large size but not so large as to obturate the pores of the activated carbon 22c and/or 22d, and then the passage of the aqueous solution is stopped.

Thus, particles of the hydroxyapatite are borne and held by the activated carbon 22c and/or 22d.

Except for the above, the structure of the drinking water purifier of the second embodiment is the same as that of the drinking water purifier of the first embodiment.

In the drinking water purifier of the second embodiment, as in the drinking water purifier of the first embodiment, when drinking water passes through the filtration layer constituted by the granular activated carbon 22c and/or the fibrous activated carbon 22d bearing and holding the calcium phosphate ceramic 22a, and the filtration layer constituted by the hollow fiber filtration films 3, chlorine odor, musty odor, etc. are removed by the activated carbon 22c and/or 22d, lead is removed by the calcium phosphate ceramic 22a, and other contaminants, microorganisms, etc. are removed by the hollow fiber filtration films 3. The calcium phosphate ceramic 22a maintains its lead adsorbing capability for a long time. Lead adsorbed by the calcium phosphate ceramic 22a does not elute in large quantity back into the drinking water. As the activated carbon 22c and/or 22d and the calcium phosphate ceramic 22a are charged in the same compartment 1a, the size of the present water purifier is smaller than that of a water purifier wherein the activated carbon and the calcium phosphate ceramic are charged in different compartments.

A drinking water purifier in accordance with a third embodiment of the present invention will be described with reference to Figures 3(a), 3(b).

In the third embodiment, granular calcium phosphate ceramic 32a and/or fibrous calcium phosphate ceramic 32b bearing and holding granular activated carbon 32c, as shown in Figures 3(a), 3(b), is charged in the first compartment 1a.

The granular activated carbon 32c is caused to be borne and held by the granular calcium phosphate ceramic 32a and/or the fibrous calcium phosphate ceramic 32b by means of thermal spraying.

Except for the above, the structure of the drinking water purifier of the third embodiment is the same as that of the drinking water purifier of the first embodiment.

In the present water purifier of the third embodiment, as in the drinking water purifier of the first embodiment, when drinking water passes through the filtration layer constituted by the granular calcium phosphate ceramic 32a and/or the fibrous calcium phosphate ceramic 32b bearing and holding the granular activated carbon 32c and the filtration layer constituted by the hollow fiber filtration films 3, chlorine odor, musty odor, etc. are removed by the activated carbon 32c, lead is removed by the calcium phosphate ceramic 32a, 32b, and other contaminants, microorganisms, etc. are removed by the hollow fiber filtration films 3. The calcium phosphate ceramic 32a, 32b maintains its lead adsorbing capability for a long time. Lead adsorbed by the calcium phosphate ceramic 32a, 32b does not elute in large quantity back into the drinking water. As the granular activated carbon 32c and the calcium phosphate ceramic 32a and/or 32b are charged in the same compartment 1a, the size of the present water purifier is smaller than that of a water purifier wherein the activated carbon and the calcium phosphate ceramic are charged in different compartments.

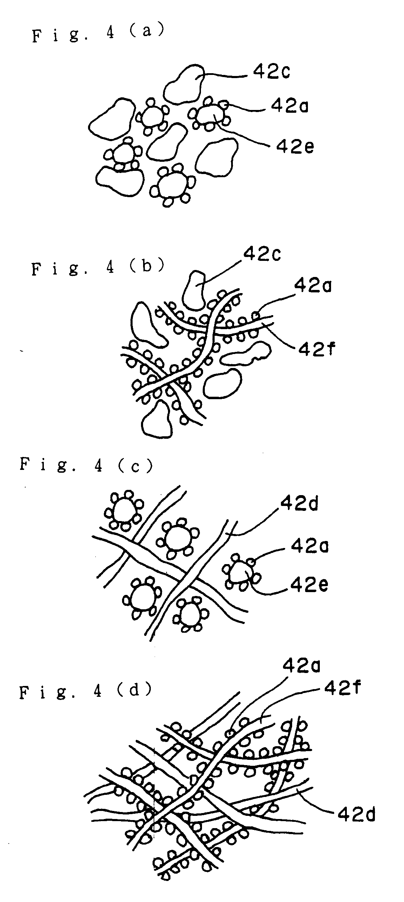

A drinking water purifier in accordance with a fourth embodiment of the present invention will be described with reference to Figures 4(a), 4(b), 4(c) and 4(d).

In the fourth embodiment, a mixture of granular activated carbon 42c and/or fibrous activated carbon 42d and granular base material 42e and/or fibrous base material 42f bearing and holding granular calcium phosphate ceramic 42a, as shown in Figures 4(a), 4(b), 4(c) and 4(d), is charged in the first compartment 1a.

The same method as used in the second embodiment may be used for causing the granular base material 42e and/or the fibrous base material 42f to bear and hold the granular calcium phosphate ceramic 42a. In this method, glass powder containing mainly CaO and SiO₂ is located separated from and opposing to the base material 42e and/or 42f, substantially saturated or supersaturated aqueous solution of the components of hydroxyapatite is passed from the glass powder to the base material 42e and/or 42f to permeate the base material 42e and/or 42f, particles of hydroxyapatite are grown up, and then the passage of the aqueous solution is stopped. Thus, particles of the hydroxyapatite are borne and held by the base material 42e and/or 42f.

As disclosed in Japanese Patent Application no. 70189/1994 by the inventors of the present invention, the granular base material 42e and the fibrous base material 42f may be of any kind, including high-molecular organic compounds such as cellulose, polysulfone, polyamide, polyvinyl alcohol, nylon, polystyrene, polypropylene, polycarbonate, polyethylene, and the like and ceramics, metals, and the like. The base materials 42e and 42f may be porous or nonporous.

Except for the above, the structure of the drinking water purifier of the fourth embodiment is the same as that of the drinking water purifier of the first embodiment.

In the drinking water purifier of the fourth embodiment, as in the drinking water purifier of the first embodiment, when drinking water passes through the filtration layer constituted by the mixture of the granular activated carbon 42c and/or the fibrous activated carbon 42d and the granular base material 42e and/or the fibrous base material 42f bearing and holding the calcium phosphate ceramic 42a and the filtration layer constituted by the hollow fiber filtration films 3, chlorine odor, musty odor, etc. are removed by the activated carbon 42c and/or 42d, lead is removed by the calcium phosphate ceramic 42a, and other contaminants, microorganisms, etc. are removed by the hollow fiber filtration films 3. The calcium phosphate ceramic 42a maintains its lead adsorbing capability for a long time. Lead adsorbed by the calcium phosphate ceramic 42a does not elute in large quantity back into the drinking water. As the activated carbon 42c and/or 42d and the calcium phosphate ceramic 42a are charged in the same compartment 1a, the size of the present water purifier is smaller than that of a water purifier wherein the activated carbon and the calcium phosphate ceramic are charged in different compartments.

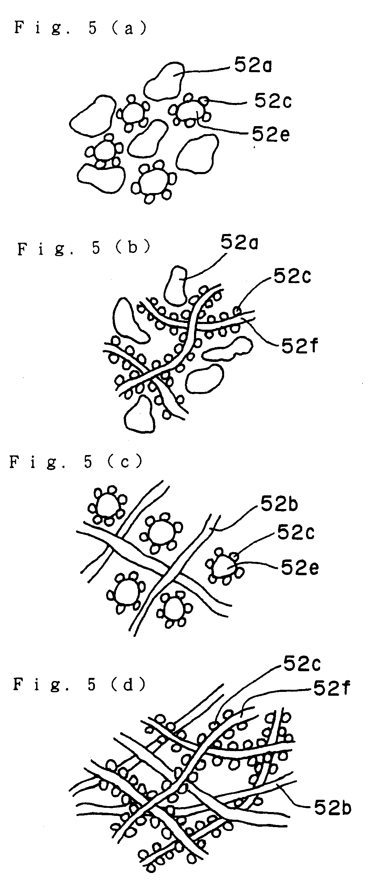

A drinking water purifier in accordance with a fifth embodiment of the present invention will be described with reference to Figures 5(a), 5(b), 5(c) and 5(d).

In the fifth embodiment, a mixture of granular calcium phosphate ceramic 52a and/or fibrous calcium phosphate ceramic 52b and granular base material 52e and/or fibrous base material 52f bearing and holding granular activated carbon 52c, as shown in Figures 5(a), 5(b), 5(c) and 5(d), is charged in the first compartment 1a.

The granular activated carbon 52c is caused to be borne and held by the granular base material 52e and/or fibrous base material 52f by means of thermal spraying.

Examples of the granular base material 52e and the fibrous base material 52f are high-molecular organic compounds such as cellulose, polysulfone, polyamide, polyvinyl alcohol, nylon, polystyrene, polypropylene, polycarbonate, polyethylene, etc. The base material 52e and 52f may be porous or nonporous.

Except for the above, the structure of the drinking water purifier of the fifth embodiment is the same as that of the drinking water purifier of the first embodiment.

In the drinking water purifier of the fifth embodiment, as in the drinking water purifier of the first embodiment, when drinking water passes through the filtration layer constituted by the mixture of the granular calcium phosphate ceramic 52a and/or the fibrous calcium phosphate ceramic 52b and the granular base material 52e and/or the fibrous base material 52f bearing and holding the granular activated carbon 52c and the filtration layer constituted by the hollow fiber filtration films 3, chlorine odor, musty odor, etc. are removed by the activated carbon 52c, lead is removed by the calcium phosphate ceramic 52a, 52b, and other contaminants, microorganisms, etc. are removed by the hollow fiber filtration films 3. The calcium phosphate ceramic 52a, 52b maintains its lead adsorbing capability for a long time. Lead adsorbed by the calcium phosphate ceramic 52a, 52b does not elute in large quantity back into the drinking water. As the activated carbon 52c and the calcium phosphate ceramic 52a and/or 52b are charged in the same compartment 1a, the size of the present water purifier is smaller than that of a water purifier wherein the activated carbon and the calcium phosphate ceramic are charged in different compartments.

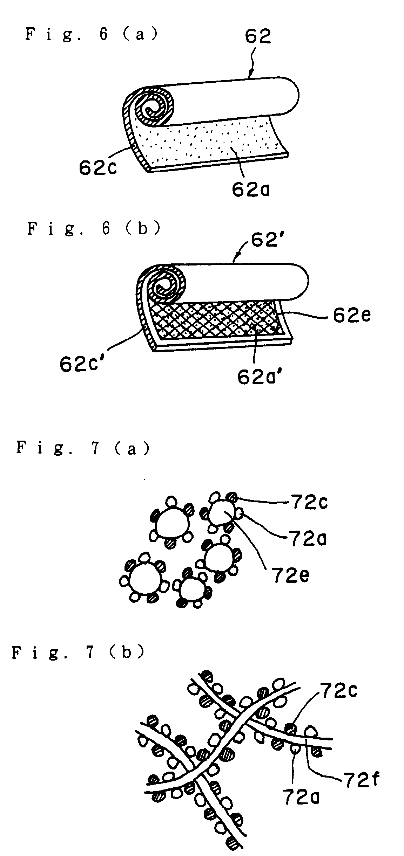

A drinking water purifier in accordance with a sixth embodiment of the present invention will be described with reference to Figures 6(a) and 6(b).

In the sixth embodiment, as shown in Figure 6(a), a stacked body 62 having a layer of granular and/or fibrous calcium phosphate ceramic 62a and a layer of unwoven fabric 62c constituted of fibrous activated carbon, and being made by coiling the unwoven fabric 62c constituted of the fibrous activated carbon on whose surface granular and/or fibrous calcium phosphate ceramic 62a is scattered, is charged in the compartment 1a, or as shown in Figure 6(b), a stacked body 62' having a layer of granular calcium phosphate ceramic 62a' and a layer of unwoven fabric 62c' constituted of fibrous activated carbon, and being made by coiling into an integral body a porous base material sheet 62e bearing and holding the granular calcium phosphate ceramic 62a' and the unwoven fabric 62c' constituted of the fibrous activated carbon, is charged in the compartment 1a. The porous base material sheet 62e may be any kind of porous material sheet such as stainless steel mesh, glass fiber sheet, unwoven fabric, plastic mesh, etc. The same method as used in the fourth embodiment is used for causing the porous base material sheet 62e to bear and hold the granular calcium phosphate ceramic 62a' .

Except for the above, the structure of the drinking water purifier of the sixth embodiment is the same as that of the drinking water purifier of the first embodiment.

In the drinking water purifier of the sixth embodiment, as in the drinking water purifier of the first embodiment, when drinking water passes through the filtration layer constituted by the stacked body 62 having the layer of the granular and/or fibrous calcium phosphate ceramic 62a and the layer of the unwoven fabric 62c constituted by the fibrous activated carbon and the filtration layer constituted by the hollow fiber filtration films 3, or when drinking water passes through the filtration layer constituted by the stacked body 62' having the layer of granular calcium phosphate ceramic 62a' and the layer of the unwoven fabric 62c' constituted of the fibrous activated carbon and the filtration layer constituted by the hollow fiber filtration films 3, chlorine odor, musty odor, etc. are removed by the unwoven fabric 62c, 62c' constituted of the fibrous activated carbon, lead is removed by the granular and/or fibrous calcium phosphate ceramic 62a, granular calcium phosphate ceramic 62a' , and other contaminants, microorganisms, etc. are removed by the hollow fiber filtration films 3.

The calcium phosphate ceramic 62a, 62a' maintains its lead adsorbing capability for a long time. Lead adsorbed by the calcium phosphate ceramic 62a, 62a' does not elute in large quantity back into the drinking water. As the unwoven fabric 62c, 62c' constituted of the fibrous activated carbon and the calcium phosphate ceramic 62a, 62a' are charged in the same compartment 1a, the size of the present water purifier is smaller than that of a water purifier wherein they are charged in different compartments.

A drinking water purifier in accordance with a seventh embodiment of the present invention will be described with reference to Figures 7(a) and 7(b).

In the seventh embodiment, granular base material 72e and/or fibrous base material 72f bearing and holding particles 72a of calcium phosphate ceramic and particles 72c of activated carbon, as shown in Figures 7(a) and 7(b), are charged in the compartment 1a.

The same method as used in the fourth embodiment is used for causing the granular base material 72e and/or the fibrous base material 72f to bear and hold the granular calcium phosphate ceramic 72a.

The particles 72c of the activated carbon are caused to be borne and held by the granular base material 72e or fibrous base material 72f by means of thermal spraying of particles of the activated carbon on the granular base material 72e or fibrous base material 72f bearing and holding the particles 72a of the calcium phosphate ceramic.

Examples of the granular base material 72e and the fibrous base material 72f are high-molecular organic compound such as cellulose, polysulfone, polyamide, polyvinyl alcohol, nylon, polystyrene, polypropylene, polycarbonate, polyethylene, etc. The granular base material 72e and the fibrous base material 72f may be porous or nonporous.

Except for the above, the structure of the drinking water purifier of the seventh embodiment is the same as that of the drinking water purifier of the first embodiment.

In the drinking water purifier of the seventh embodiment, as in the drinking water purlfier of the first embodiment, when drinking water passes through the filtration layer constituted by the granular base material 72e and/or the fibrous base material 72f bearing and holding the calcium phosphate ceramic 72a and particles 72c of the activated carbon and the filtration layer constituted by the hollow fiber filtration films 3, chlorine odor, musty odor, etc. are removed by the activated carbon 72c, lead is removed by the calcium phosphate ceramic 72a, and other contaminants, microorganisms, etc. are removed by the hollow fiber filtration films 3. The calcium phosphate ceramic 72a maintains its lead adsorbing capability for a long time. Lead adsorbed by the calcium phosphate ceramic 72a does not elute in large quantity back into the drinking water. As the activated carbon 72c and the calcium phosphate ceramic 72a are charged in the same compartment 1a, the size of the present water purifier is smaller than that of a water purifier wherein they are charged in different compartments.

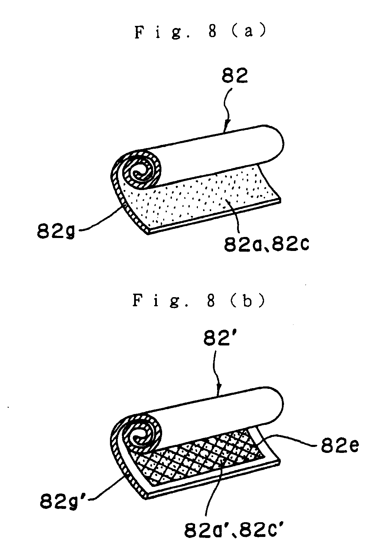

A drinking water purifier in accordance with an eighth embodiment of the present invention will be described with reference to Figures 8(a) and 8(b).

In the eighth embodiment, a roll shaped stacked body 82 made by coiling an unwoven fabric 82g made of a base material on whose surface granular and/or fibrous calcium phosphate ceramic 82a and granular and/or fibrous activated carbon 82c are scattered, as shown in Figure 8(a), is charged in the compartment 1a, or a stacked body 82' made by coiling into an integral body a porous base material sheet 82e bearing and holding granular calcium phosphate ceramic 82a' and granular activated carbon 82c' and an unwoven fabric 82g' made of a base material, as shown in Figure 8(b), is charged in the compartment 1a. Examples of the unwoven fabric 82g and 82g' are unwoven fabrics made of glass fiber, plastic fiber, metal fiber, activated carbon fiber, etc. Examples of the porous base material sheet 82e are unwoven fabric, mesh, etc. made of a high-molecular organic compound such as cellulose, polysulfone, polyamide, polyvinyl alcohol, nylon, polystyrene, polypropylene, polycarbonate, polyethylene, etc.

The same method as used in the fourth embodiment is used for causing the porous base material sheet 82e to bear and hold the granular calcium phosphate ceramic 82a' . The granular activated carbon 82c' is caused to be borne and held by the porous base material sheet 82e by thermal spraying.

Except for the above, the structure of the drinking water purifier of the eighth embodiment is the same as that of the drinking water purifier of the first embodiment.

In the drinking water purifier of the eighth embodiment, as in the drinking water purifier of the first embodiment, when drinking water passes through the filtration layer constituted by the stacked body 82, 82' and the filtration layer constituted by the hollow fiber filtration films 3, chlorine odor, musty odor, etc. are removed by the activated carbon 82c, 82c' , lead is removed by the calcium phosphate ceramic 82a, 82a' , and other contaminants, microorganisms, etc. are removed by the hollow fiber filtration films 3. The calcium phosphate ceramic 82a, 82a' maintains its lead adsorbing capability for a long time. Lead adsorbed by the calcium phosphate ceramic 82a, 82a' does not elute in large quantity back into the drinking water. As the activated carbon 82c, 82c' and the calcium phosphate ceramic 82a, 82a' are charged in the same compartment 1a, the size of the present water purifier is smaller than that of a water purifier wherein they are charged in different compartments.

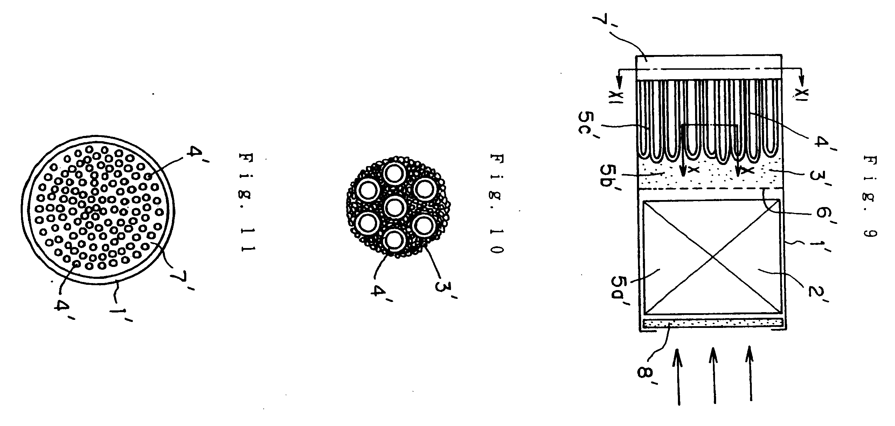

A drinking water purifier in accordance with a ninth embodiment of the present invention will be described with reference to Figures 9 to 11.

As shown in Figure 9, a first compartment 5a' , a second compartment 5b' and a third compartment 5c' are disposed in a case 1' . The first compartment 5a' is filled with activated carbon 2' . The second compartment 5b' is filled with a calcium phosphate ceramic powder 3' such as hydroxyapatite, calcium tertiary phosphate, bone char, etc. The third compartment 5c' is filled with hollow fiber filtration films 4' . The compartments are disposed in series in the order of the first compartment 5a' , the second compartment 5b' and the third compartment 5c' from upstream to downstream relative to the water flow indicated by arrows in Figure 9.

As shown in Figure 10, the spaces between the hollow fiber filtration films 4' are also filled with the calcium phosphate ceramic powder 3' such as hydroxyapatite, calcium tertiary phosphate, bone char, etc.

A porous partition plate 6' is disposed between the first compartment 5a' and the second compartment 5b' .

The downstream ends of the hollow fiber filtration films 4' charged in the third compartment 5c' are held by an end plate 7' as shown in Figure 11.

A porous partition plate 8' for removing coarse iron rust particles from the water flow is disposed in the first compartment 5a' upstream of the the activated carbon 2' .

In the water purifier of the ninth embodiment, when drinking water passes through the filtration layers constituted by the activated carbon 2' , the calcium phosphate ceramic powder 3' and the hollow fiber filtration films 4' , chlorine odor, musty odor, etc. are removed by the activated carbon 2' , lead is removed by the calcium phosphate ceramic powder 3' , and other contaminants, microorganisms, etc. are removed by the hollow fiber filtration films 4' . The calcium phosphate ceramic powder 3' does not remove useful minerals.

The lead removal rate is enhanced by filling the spaces between the hollow fiber filtration films 4' with the calcium phosphate ceramic powder 3' .

Backflow of the calcium phosphate ceramic powder 3' in the upstream direction, which would cause a reduction of the flow rate of the water, is prevented by disposing the porous partition plate 6' between the second compartment 5b' filled with the calcium phosphate ceramic powder 3' and the first compartment 5a' filled with the activated carbon 2' .

The porous partition plate 8' disposed in the upstream portion of the first compartment 5a' filled with the activated carbon 2' removes coarse iron rust particles from the water flow, and, in addition, prevents backflow of the activated carbon 2' .

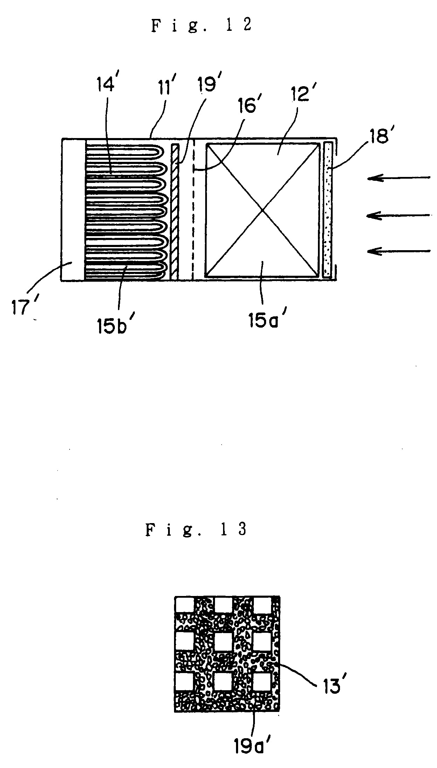

A drinking water purifier in accordance with a tenth embodiment of the present invention will be described with reference to Figures 12 and 13.

As shown in Figure 12, a first compartment 15a' and a second compartment 15b' are disposed in a case 11' . The first compartment 15a' is filled with activated carbon 12' . The second compartment 15b' is filled with hollow fiber filtration films 14' . The compartments are disposed in series with the first compartment 15a' on the upstream side and the second compartment 15b' on the downstream side relative to the water flow indicated by arrows in Figure 12. A porous filtration plate 19' is disposed between the first compartment 15a' and the second compartment 15b' . The filtration plate 19' is made of a woven fabric, an unwoven fabric or the like whose fibers 19a' bear and hold a calcium phosphate ceramic powder 13' such as hydroxyapatite, calcium tertiary phosphate, bone char, etc. on their surfaces. A porous partition plate 16' is disposed between the filtration plate 19' bearing and holding the calcium phosphate ceramic powder 13' on its surface and the first compartment 15a' .

The downstream ends of the hollow fiber filtration films 14' charged in the second compartment 15b' are held by an end plate 17' .

A porous partition plate 18' for removing coarse iron rust particles from the water flow is disposed in the first compartment 15a' upstream of the the activated carbon 12' .

In the water purifier of the tenth embodiment, when drinking water passes through the filtration plate 19' , lead in the drinking water is removed by the calcium phosphate ceramic powder 13' borne and held by the surfaces of the fibers 19a' . The porous partition plate 16' prevents backflow of any calcium phosphate ceramic powder 13' which peels off the porous filtration plate 19' . When the calcium phosphate ceramic powder 13' is firmly borne and held by the porous filtration plate 19' , there is no need to dispose the porous partition plate 16' .

Preferred embodiments of the present invention have been described. The present invention can of course be applied to a water purifier for industrial liquid waste containing lead.

The hollow fiber filtration films may be omitted from the above described water purifiers. Water purifiers are useful insofar as they can remove lead, chlorine odor and musty odor.

The configuration of the calcium phosphate ceramic is not restricted to powder, particle and fiber. For example, in the first embodiment, a stacked body constituted by a lump of the activated carbon and a porous lump of calcium phosphate ceramic may be disposed in the first compartment 1a.

In the sixth embodiment, the stacked body may be constituted by folding an unwoven fabric 62c or stacking multiple unwoven fabrics 62c made of the activated carbon fiber and on whose surfaces granular and/or fibrous calcium phosphate ceramic 62a is scattered. The stacked body may be constituted by folding into an integral body a porous base material sheet 62e bearing and holding the granular calcium phosphate ceramic 62a' and an unwoven fabric 62c' made of the activated carbon fiber, or stacking into an integral body multiple porous base material sheets 62e bearing and holding the granular calcium phosphate ceramic 62a' and multiple unwoven fabrics 62c' made of the activated carbon fiber.

In the eighth embodiment, the stacked body may be constituted by folding an unwoven fabric 82g or stacking multiple unwoven fabrics 82g made of the base material and on whose surfaces granular and/or fibrous calcium phosphate ceramic 82a and granular and/or fibrous activated carbon 82c are scattered. The stacked body may be constituted by folding into an integral body a porous base material sheet 82e bearing and holding the granular calcium phosphate ceramic 82a' and the granular activated carbon 82c' and the unwoven fabric 82g' made of the base material, or stacking into an integral body multiple porous base material sheets 82e bearing and holding the granular calcium phosphate ceramic 82a' and the granular activated carbon 82c' and multiple unwoven fabrics 82g' made of the base material.

In the sixth embodiment, the unwoven fabrics 62c, 62c' made of the activated carbon fiber may be woven fabrics made of the activated carbon fiber. In the eighth embodiment, the unwoven fabrics 82g, 82g' made of the base material may be woven fabrics made of the base material. Insofar as they are porous, they may be either unwoven fabrics or woven fabrics.

In the ninth embodiment, the activated carbon, the calcium phosphate ceramic and the hollow fiber filtration films are arranged in the order of the activated carbon, the calcium phosphate ceramic and the hollow fiber filtration films, from upstream to downstream. This is not limitative, however, and they may be arranged in any order.

In the tenth embodiment, the activated carbon, the porous filtration plate bearing and holding the calcium phosphate ceramic powder and the hollow fiber filtration films are arranged in the order of the activated carbon, the porous filtration plate bearing and holding the calcium phosphate ceramic powder and the hollow fiber filtration film from upstream to downstream. This is not limitative, however, and they may be arranged in any order. A plurality of porous filtration plates bearing and holding the calcium phosphate ceramic powder may be disposed as separated from, or stacked on each other.

### ( 2 ) Effect Confirmation Tests

The effects of the present invention were confirmed by tests.

### 〈 1 〉 Removal tests of lead dissolved in water

0.5 g of an adsorbent powder selected from hydroxyapatite, calcium tertiary phosphate, bone char, activated carbon, BAKUHANSEKI (a kind of quartz porphyry), zeolite, and montmorillonite was put in a bottle with a 250 cm³ volume and made of Teflon or polypropylene, and thereafter, 200 cm³ of water containing Pb (lead), Ca (calcium) and Mg (magnesium) at concentrations of 100 µg/dm³, 40 mg/dm³ and 20 mg/dm³ respectively was poured into the bottle.

Then, the bottle was mounted on a shaking apparatus and shaken for 0 to 60 minutes at the shaking frequency of 150 times/minute.

Just after the completion of the shaking, the tested liquid was sampled. Pb concentration was measured by potentiometric-stripping-analysis. Ca concentration and Mg concentration were measured by atomic absorption analysis.

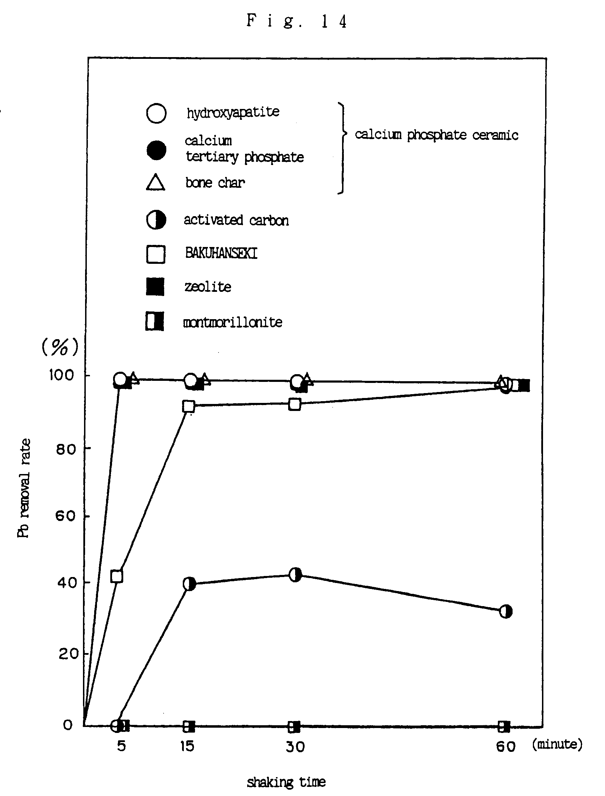

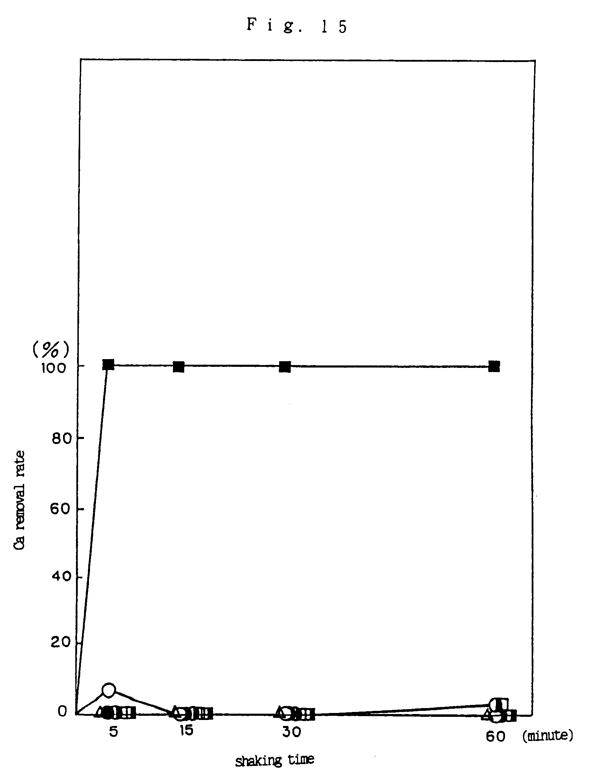

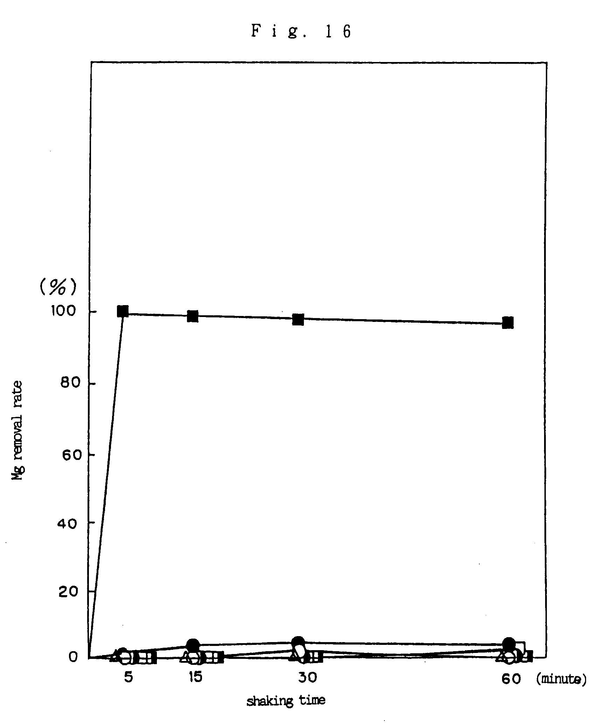

The correlation between Pb removal rate and shaking time for each adsorbent is shown in Figure 14. The correlation between Ca removal rate and shaking time for each adsorbent is shown in Figure 15. The correlation between Mg removal rate and shaking time for each adsorbent is shown in Figure 16.

It is clear from Figures 14 to 16 that:
① Hydroxyapatite, calcium tertiary phosphate and bone char remove substantially all lead, which is harmful to the human body, in a short time and do not remove Ca and Mg which are useful to the human body.
② Zeolite removes substantially all lead in a short time. But zeolite also removes substantially all of the useful Ca and Mg in a short time.
③ BAKUHANSEKI removes lead and does not remove Ca and Mg. But the lead removal rate of the bakuhanseki is low when the shaking time is short.
④ The lead removal rate of activated carbon is low.
⑤ Montmorillonite does not remove lead.

From the above, it is clear that a drinking water purifier which removes lead contained in drinking water and does not remove useful minerals can be obtained by using a calcium phosphate ceramic such as hydroxyapatite, calcium tertiary phosphate, bone char, etc.

Besides hydroxyapatite, calcium tertiary phosphate and bone char, such materials as calcium primary phosphate, calcium secondary phosphate, calcium pyrophosphate, tetracalcium phosphate, octacalcium phosphate, animal bone powder, etc. can also be used as the calcium phosphate ceramic

### 〈 2 〉 Lead elution test 1

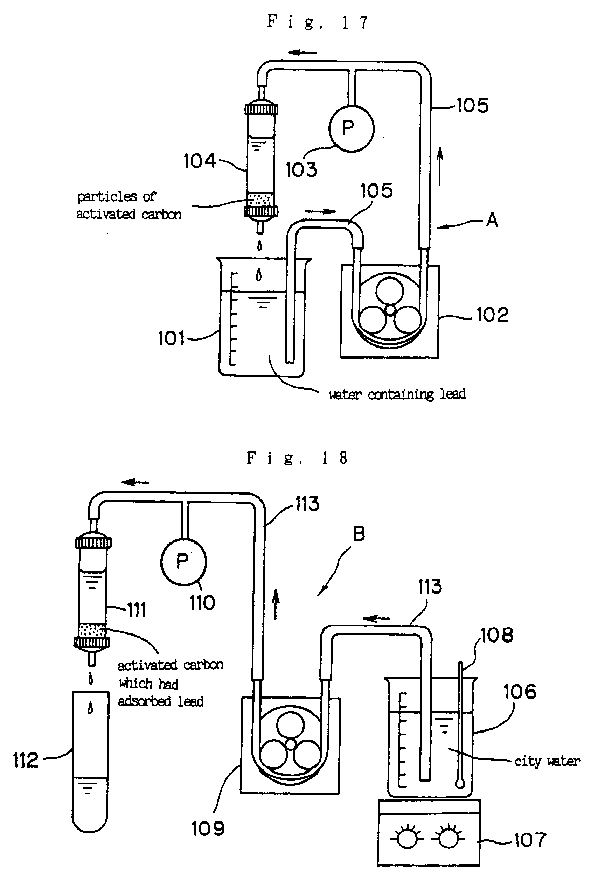

As shown in Figure 17, an apparatus A was constituted of a beaker 101 filled with water containing lead, a tubing pump 102, a pressure gage 103, a column 104 and conduits 105 for connecting the aforementioned members. Particles of activated carbon of 100 to 150 µm diameter were charged in the column 104 of the apparatus A. The water containing lead was circulated with the water pressure in the conduits 105 or the flow rate in the conduits 105 maintained constant to make the particles of the activated carbon adsorb lead at the rate of about 10 mg/g.

As shown in Figure 18, an apparatus B was constituted of a beaker 106 filled with city water, a heater 107 for warming the city water in the beaker 106, a thermometer 108 for measuring the temperature of the city water in the beaker 106, a tubing pump 109, a pressure gage 110, a column 111, a test tube 112 and conduits 113 for connecting the aforementioned members. 2.5 g of the particles of activated carbon which had adsorbed lead at the rate of 10 mg/g were removed from the column 104 of the apparatus A and charged in the column 111 of the apparatus B. The city water which contained lead at a concentration of not more than 10 µg/dm³ and was warmed to a prescribed temperature (20°C, 40°C, 60°C or 80°C), was led from the beaker 106 to the column 111 of the apparatus B with the water pressure in the conduits 113 maintained constant or the space velocity (volumetric flow velocity of the liquid divided by apparent volume of filling material) in the conduits 113 maintained at a constant value larger than 400/hour. Then, the city water was passed through the particles of the activated carbon having about 10 mg/g adsorbed lead and collected in the test tube 112. The lead concentration of the city water collected in the test tube 112 was measured by potentiometric-stripping-analysis.

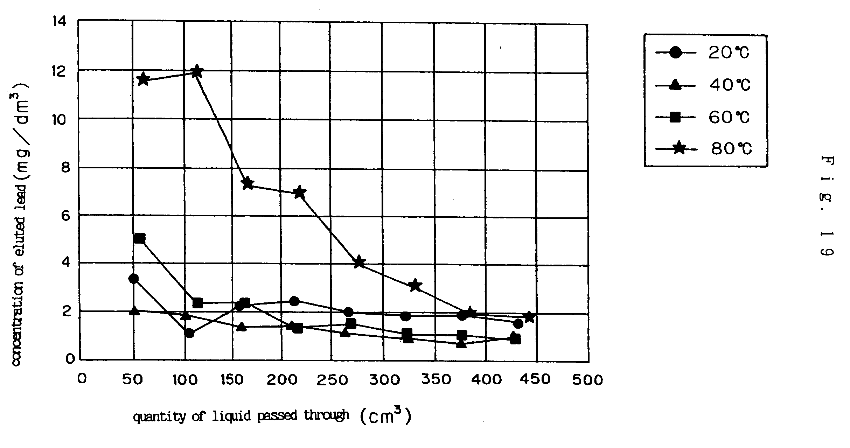

The test conditions of the lead elution tests using the apparatus B are shown in Table 1. The results of the lead elution tests using the apparatus B are shown in Figure 19.

From Table 1 and Figure 19, it is clear that when city water of 20°C to 80°C temperature and containing lead at a concentration of not more than 10 µg/dm³ is passed through particles of activated carbon adsorbing lead at a rate of about 10 mg/g, water containing lead at a concentration of not less than 1 mg/dm³ (a concentration 100 or more times as high as that of the city water) flows out of the particles of activated carbon. It is also clear that the amount of eluted lead increases as the temperature of the water increases.

### 〈 3 〉 Lead elution test 2

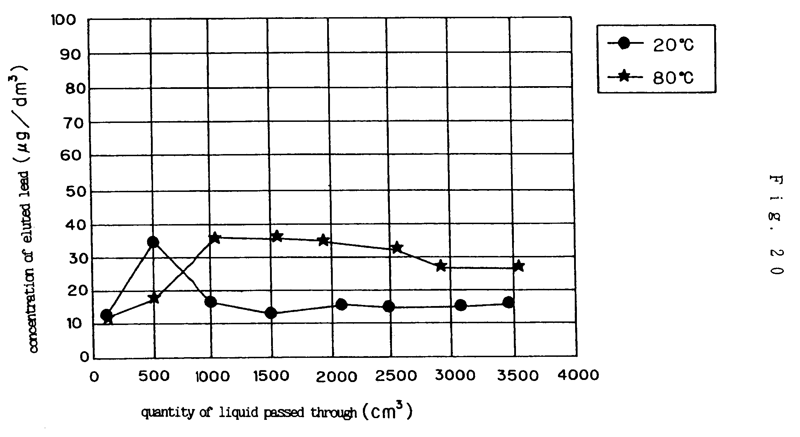

Lead elution tests were carried out using the apparatuses A and B used in the lead elution test 1, setting the amount of lead adsorbed by the activated carbon at 0.38 mg/g, setting the temperature of the city water in the beaker 106 at 20°C and 80°C, and setting the other test conditions substantially the same as those in the lead elution test 1. The test conditions of the lead elution tests are shown in Table 2. The results of the tests are shown in Figure 20.

From Table 2 and Figure 20, it is clear that when city water of 20°C and containing lead at a concentration of 1.5 µg/dm³ is passed through particles of activated carbon adsorbing lead at the rate of about 0.38 mg/g, water containing lead at a concentration about 10 times as high as that of the city water flows out of the particles of the activated carbon. It is also clear that when city water of 80°C and containing lead at a concentration of 2.35 µg/dm³ is passed through particles of activated carbon adsorbing lead at the rate of about 0.38 mg/g, water containing lead at a concentration about 15 times as high as that of the city water flows out of the particles of the activated carbon.

### 〈 4 〉 Lead elution test 3

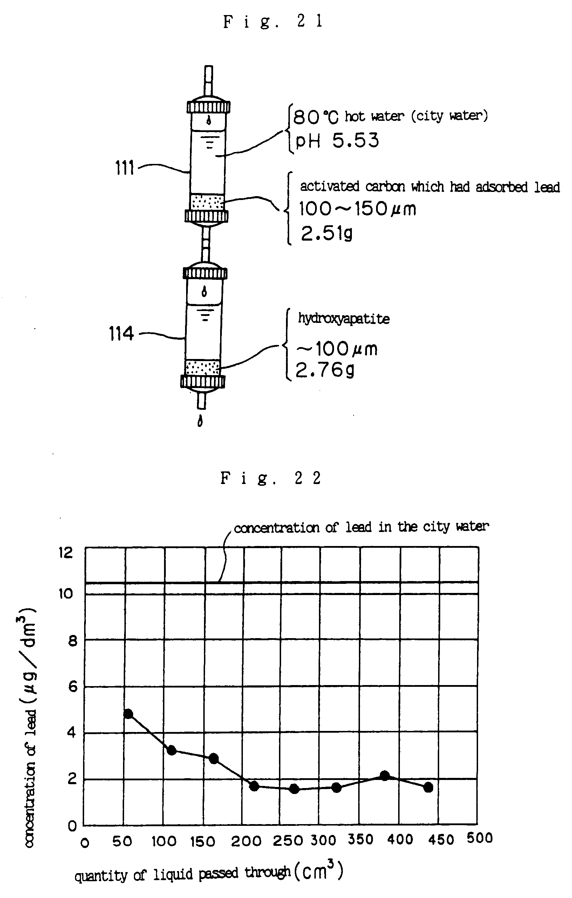

Using the apparatuses A of the lead elution test 1, particles of activated carbon of 100 to 150 µm diameter were caused to adsorb about 9 mg/g of lead in the same way as in the lead elution test 1. The particles of activated carbon adsorbing about 9 mg/g of lead were charged in the column 111 of the apparatus B of the lead elution test 1. As shown in Figure 21, a column 114 filled with particles of hydroxyapatite of a diameter of less than 100 µm was disposed below and connected in tandem with the column 111.

City water containing lead at a concentration of about 10 µg/dm³ and of 80°C temperature was led from the beaker 106 of the apparatus B to the column 111 and passed through the particles of the activated carbon adsorbing about 9 mg/g of lead. The city water passing through the particles of activated carbon was led to the column 114 filled with the particles of hydroxyapatite, passed through the particles of hydroxyapatite, and then collected in the test tube 112. The lead concentration of the hot water collected in the test tube 112 was measured by potentiometric-stripping-analysis.

The test conditions of the lead elution tests are shown in Table 3. The results of the lead elution tests are shown in Figure 22.

From Table 3 and Figure 22, it is clear that the lead concentration of the water collected in the test tube 112 was reduced to 1/2 to 1/5 of that of the city water in the beaker 106.

From a comparison with the results of the lead elution test 1, it is clear that the highly concentrated lead which elutes from the activated carbon into the hot water is adsorbed by the hydroxyapatite.

### 〈 5 〉 Lead elution test 4

Using the apparatuses A of the lead elution test 1, particles of activated carbon, a mixture of particles of activated carbon and particles of hydroxyapatite wherein the volume ratio of the activated carbon to the hydroxyapatite was 1 to 1, a mixture of particles of activated carbon and particles of calcium tertiary phosphate wherein the volume ratio of the activated carbon to the calcium tertiary phosphate was 1 to 1, and a mixture of particles of activated carbon and particles of bone char wherein the volume ratio of the activated carbon to the bone char was 1 to 1, were each caused to adsorb about 0.3 to 0.4 mg/g of lead in the same way as in the lead elution test 1.

The diameter of the particles was set at 100 to 150 µm. In each test run, the column 111 of the apparatuses B of the lead elution test 1 was filled with the particles of the activated carbon, the mixture of the particles of the activated carbon and the particles of the hydroxyapatite, the mixture of the particles of the activated carbon and the particles of the calcium tertiary phosphate, or the mixture of the particles of the activated carbon and the particles of the bone char, after the particles or the mixture had adsorbed about 0.3 to 0.4 mg/g of lead.

In the same way as in the lead elution test 1, city water containing lead at a concentration of about 1.0 to 5.0 µg/dm³ and of 80 °C temperature was led from the beaker 106 of the apparatus B to the column 111 and passed through the particles of the activated carbon, the mixture of the particles of the activated carbon and the particles of the hydroxyapatite, the mixture of the particles of the activated carbon and the particles of the calcium tertiary phosphate, or the mixture of the particles of the activated carbon and the particles of the bone char. The 80 °C water permeating through the particles of the activated carbon, the mixture of the particles of the activated carbon and the particles of the hydroxyapatite, the mixture of the particles of the activated carbon and the particles of the calcium tertiary phosphate, or the mixture of the particles of the activated carbon and the particles of the bone char was collected in the test tube 112. The lead concentration of the water collected in the test tube 112 was measured by potentiometric-stripping-analysis.

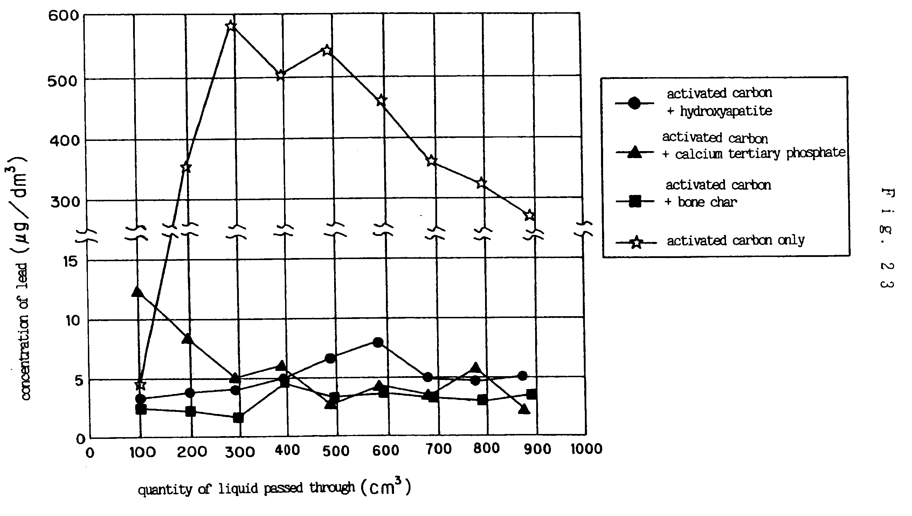

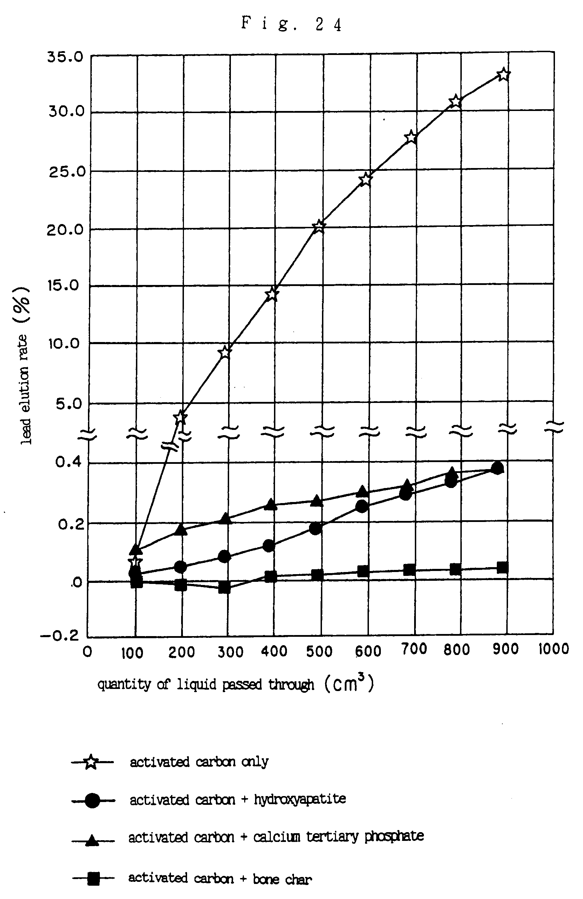

The test conditions of the lead elution tests are shown in Table 4. The results of the lead elution tests are shown in Figures 23 and 24.

From Figures 23 and 24, it is clear that when particles of activated carbon are mixed with particles of hydroxyapatite, calcium tertiary phosphate, or bone char, the lead concentration of the water passed through the mixture of the particles is reduced to about 1/100, and the lead elution rate into the treated water (integrated weight of lead eluting into the passed water divided by the weight of the lead adsorbed by a prescribed quantity of activated carbon) is reduced to about 1/15 to 1/80 of that of the water which passed through only particles of activated carbon.

From Figures 23 and 24, it is clear that when particles of activated carbon are mixed with particles of hydroxyapatite, calcium tertiary phosphate, or bone char, the elution of lead adsorbed by the particles of activated carbon into the hot water and the discharging of lead from the water purifier are prevented. It is also clear that bone char shows especially superior lead removing capability among the various kinds of calcium phosphate ceramic.

### 〈 6 〉 Purification test using a commercially available water purifier.

Particles of bone char, a mixture of particles of bone char and particles of activated carbon wherein the bone char accounted for 50 volume % , a mixture of particles of bone char and particles of activated carbon wherein the bone char accounted for 25 volume % , a mixture of particles of bone char and particles of activated carbon wherein the bone char accounted for 10 volume% , a mixture of particles of bone char and particles of activated carbon wherein the bone char accounted for 1 volume % , and particles of activated carbon, were charged into the activated carbon compartments of commercially available water purifiers. Each water purifier was subjected to four test cycles each consisting of one day during which city water with a lead concentration of 50 µg/dm³ was passed through the water purifier at a flow rate of 1.2 dm³/minute and a total volume of 500 dm³ and one day during which the water purifier was left to stand with no city water being passed therethrough. Thus, each water purifier was subjected to a purification test at a total flow volume of 2000 dm³. In each purification test, the mean lead concentration of the water passed through the water purifier was measured by potentiometric-stripping-analysis at the start of the test (initial treated water), and at every 100 dm³ of passed water volume.

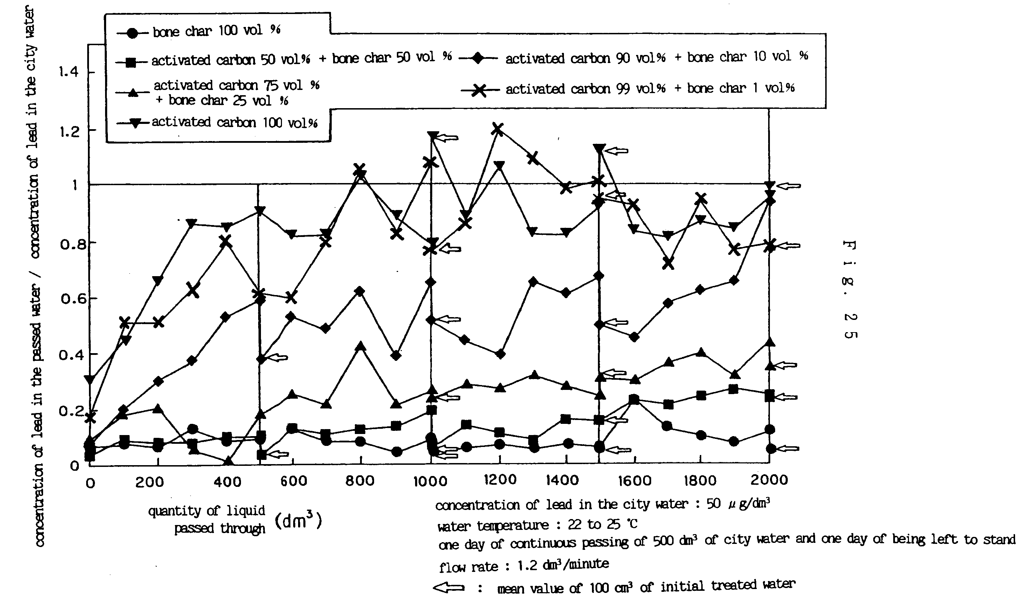

Results of the purification tests are shown in Figure 25. From Figure 25, it can be seen that when the activated carbon compartment of the water purifier was filled with the activated carbon only, the lead removing capability of the water purifier rapidly deteriorated with time and after a certain time lapse, as indicated by arrows in Figure 25, the lead adsorbed by the activated carbon eluted back into the treated water at the start of the passage of the water and the lead concentration of the treated water became higher than that of the city water before passage through the water purifier.

as indicated by arrows in Figure 25, when the activated carbon compartment of the water purifier was filled with the mixture of the particles of activated carbon and the particles of bone char wherein the bone char accounted for 1 volume % or more, the lead adsorbed by the activated carbon did not eluted back into the treated water at the start of the passage of the water and the lead concentration of the treated water did not become higher than that of the city water before passage through the water purifier.

It is clear from Figure 25 that when the activated carbon compartment of the water purifier was filled with the mixture of the particles of activated carbon and the particles of bone char wherein the bone char accounted for 25 volume % or more, the lead removing capability of the water purifier did not rapidly deteriorate with time and the lead removing capability of the water purifier was maintained for a long time.

### [ INDUSTRIAL APPLICABILITY ]

The present invention provides a water purifier which can remove lead, chlorine odor, musty odor, etc. from water, whose lead adsorbing capability does not rapidly deteriorate with age, and wherein lead once adsorbed by activated carbon does not elute back into the treated water in large quantity.

The present invention also provides a drinking water purifier which can remove lead, chlorine odor, musty odor, etc. from drinking water, which does not remove useful minerals dissolved in the drinking water, whose lead adsorbing capability does not rapidly deteriorate with age, and wherein lead once adsorbed by activated carbon does not elute back into the drinking water in large quantity.

**Table 1**

| | | | | |
|---|---|---|---|---|
| water temperature | 20°C | 40°C | 60°C | 80°C |
| concentration of lead in the city water | 3.7µg/dm³ | 6.95µg/dm³ | 6.95µg/dm³ | 6.45µg/dm³ |
| quantity of activated carbon | 2.59g | 2.53g | 2.59g | 2.54g |
| diameter of activated carbon particles | 100∼150µm | | | |
| quantity of adsorbed lead | 9.78mg/g | 10.8mg/g | 11.3mg/g | 10.3mg/g |
| space velocity | >400/hour | | | |

**Table 2**

| | | |
|---|---|---|
| water temperature | 20°C | 80°C |
| concentration of lead in the city water | 1.5µg/dm³ | 2.35µg/dm³ |
| quantity of activated carbon | 2.58g | 2.56g |
| diameter of activated carbon particles | 100∼150µm | |
| quantity of adsorbed lead | 0.38mg/g | |
| space velocity | >400/hour | |

**Table 3**

| |
|---|
| concentration of lead in the city water : 10.45µg/dm³ |
| liquid temperature : 80°C |
| activated carbon : 2.51g (100∼150µm) |
| quantity of lead adsorbed by activated carbon : 9.23mg/g |
| hydroxyapatite : 2.76g (∼100µm) |
| space velocity : >400/hour |

**Table 4**

| | | | | |
|---|---|---|---|---|
| mixture of particles | activated carbon + hydroxyapatite | activated carbon + calcium tertiary phosphate | activated carbon + bone char | activated carbon only |
| quantity of mixture of particles | 2.79g | 3.54g | 3.57g | 2.56g |
| diameter of particles | 100∼150µm | | | |
| quantity of adsorbed lead | 0.35mg/g | 0.28mg/g | 0.27mg/g | 0.38mg/g |
| city water temperature | 80°C | | | |
| concentration of lead in the city water | 0.8µg/dm³ | 1.3µg/dm³ | 2.8µg/dm³ | 4.45µg/dm³ |
| space velocity | >400/hour | | | |

## Claims

1. A water purifier having a compartment filled with activated carbon and calcium phosphate ceramic.

2. A water purifier of claim 1, wherein the calcium phosphate ceramic is bone char.

3. A water purifier of claim 1 or claim 2, wherein the ratio of the calcium phosphate ceramic to the sum of the activated carbon and the calcium phosphate ceramic is from 1 to 25 volume%.

4. A water purifier of claim 1 or claim 2, wherein the ratio of the calcium phosphate ceramic to the sum of the activated carbon and the calcium phosphate ceramic is not less than 25 volume%.

5. A water purifier of any one of claims 1 to 4, wherein granular and/or fibrous activated carbon and granular and/or fibrous calcium phosphate ceramic are charged in the compartment.

6. A water purifier of any one of claims 1 to 4, wherein granular and/or fibrous activated carbon and granular and/or fibrous phosphate ceramic are mixed and charged in the compartment.

7. A water purifier of any one of claims 1 to 4, wherein granular and/or fibrous activated carbon bearing and holding granular calcium phosphate ceramic are charged in the compartment.

8. A water purifier of any one of claims 1 to 4, wherein granular and/or fibrous calcium phosphate ceramic bearing and holding granular activated carbon are charged in the compartment.

9. A water purifier of any one of claims 1 to 4, wherein granular and/or fibrous activated carbon and granular and/or fibrous base material bearing and holding granular calcium phosphate ceramic are mixed and charged in the compartment.

10. A water purifier of any one of claims 1 to 4, wherein granular and/or fibrous calcium phosphate ceramic and granular and/or fibrous base material bearing and holding granular activated carbon are mixed and charged in the compartment.

11. A water purifier of any one of claims 1 to 4, wherein a stacked body having a layer of granular and/or fibrous activated carbon and a layer of granular and/or fibrous calcium phosphate ceramic is charged in the compartment.

12. A water purifier of claim 11, wherein the stacked body is made by coiling a fibrous activated carbon sheet on whose surface granular and/or fibrous calcium phosphate ceramic is scattered.

13. A water purifier of claim 11, wherein the stacked body is made by coiling into an integral body a fibrous activated carbon sheet and a porous base material sheet bearing and holding granular calcium phosphate ceramic.

14. A water purifier of any one of claims 1 to 4, wherein granular and/or fibrous base material bearing and holding granular activated carbon and granular calcium phosphate ceramic are charged in the compartment.

15. A water purifier of any one of claims 1 to 4, wherein a stacked body having layers each of which includes granular and/or fibrous activated carbon and granular and/or fibrous calcium phosphate ceramic is charged in the compartment.

16. A water purifier of claims 15, wherein the stacked body is made by coiling a base material sheet on whose surface granular and/or fibrous activated carbon and granular and/or fibrous calcium phosphate ceramic are scattered.

17. A water purifier of claims 15, wherein the stacked body is made by coiling into an integral body a base material sheet and a porous base material sheet bearing and holding granular calcium phosphate ceramic and granular activated carbon.

18. A water purifier which has a compartment filled with activated carbon and a compartment filled with calcium phosphate ceramic powder.

19. A water purifier of any one of the claims 1 to 18 which is a drinking water purifier.

20. A drinking water purifier of claim 19, further comprising a compartment filled with hollow fiber filtration films.

21. A drinking water purifier of claim 20, wherein spaces between the hollow fiber filtration films are filled with calcium phosphate ceramic powder.

22. A drinking water purifier comprising a compartment filled with activated carbon, a compartment filled with hollow fiber filtration films, and a porous filtration plate bearing and holding calcium phosphate ceramic powder on its surface.
